**Europäisches Patentamt**

**European Patent Office**

**Office européen des brevets**

(19)

(11) Numéro de publication: **0 121 481
B1**

(12) ## FASCICULE DE BREVET EUROPEEN

(45) Date de publication du fascicule du brevet:
**07.01.88**

(21) Numéro de dépôt: **84400644.5**

(22) Date de dépôt: **30.03.84**

(51) Int. Cl.⁴: **B 60 R 13/06**

(54) Perfectionnement au montage par collage d'un vitrage dans une baie, notamment de véhicule automobile.

(30) Priorité: **31.03.83 FR 8305328**

(43) Date de publication de la demande:
**10.10.84 Bulletin 84/41**

(45) Mention de la délivrance du brevet:
**07.01.88 Bulletin 88/1**

(84) Etats contractants désignés:
**AT BE CH DE FR GB IT LI LU NL SE**

(56) Documents cités:
**FR - A - 2 482 020
GB - A - 979 032
GB - A - 2 049 010
US - A - 3 241 277
US - A - 3 416 833
US - A - 3 434 903
US - A - 3 478 475**

(73) Titulaire: **SAINT-GOBAIN VITRAGE, Les
Miroirs 18, avenue d'Alsace, F-92400 Courbevoie (FR)**

(84) Etats contractants désignés: **BE CH FR GB IT LI LU NL
SE AT**

(73) Titulaire: **VEGLA Vereinigte Glaswerke GmbH,
Viktoriaallee 3-5, D-5100 Aachen (DE)**

(84) Etats contractants désignés: **DE**

(72) Inventeur: **Kunert, Heinz, Am Krieler Dom 23,
D-5000 Koln 41 (DE)**

(74) Mandataire: **Leconte, Jean-Gérard et al, Saint-Gobain
Recherche 39, Quai Lucien Lefranc,
F-93304 Aubervilliers Cedex (FR)**

ACTORUM AG

## Description

La présente invention a pour objet un perfectionnement au montage d'un vitrage dans une baie par collage au moyen d'un cordon d'adhésif composé de deux portions adhérant l'une à l'autre.

On se réfère, dans la description suivante, essentiellement aux vitrages destinés aux véhicules automobiles; néanmoins, l'invention peut également s'appliquer dès que se pose le problème de monter un vitrage dans une baie, par collage, dans des conditions d'adhérence et d'étanchéité satisfaisantes. On peut envisager par exemple des applications dans le bâtiment.

Différents procédés de montage par collage de vitrages dans une baie sont déjà connus. Il a par exemple été suggéré d'utiliser des bandes d'adhésif constituées de matières aptes à adhérer l'une à l'autre, dont l'une est appliquée sur le vitrage et l'autre sur le châssis de la baie. La publication de brevet DE-B-1 755 274 décrit un tel procédé, dans lequel une bande d'adhésif placée sur le bord du vitrage présente une étroite aspérité qui s'enfonce dans le matériau plus mou qui constitue une bande placée sur la tôle de la carrosserie.

On connaît également par le brevet US-A-3 478 475 un procédé de montage par collage d'un vitrage dans une baie de carrosserie à l'aide d'un double cordon adhésif. Chacune des deux portions de cordon est constituée d'une bande préfabriquée. L'une est dure et est déposée sur le vitrage, l'autre est relativement molle et élastique et est déposée dans la carrosserie. Mais le fait que la première portion soit déjà durcie au moment de son montage sur le vitrage ne permet pas d'obtenir des conditions d'adhérence totalement satisfaisantes.

Il apparaît donc que en fixant les vitrages de véhicules au moyen de bandes d'adhésif préfabriquées, on répond difficilement, dans de nombreux cas, aux exigences d'adhérence et d'étanchéité qui s'imposent vis à vis de la baie de la carrosserie.

L'invention propose de fournir un procédé de montage par collage d'un vitrage dans une baie, en particulier une baie de carrosserie de véhicules automobiles, à l'aide d'un cordon adhésif composé de deux portions de cordon superposées et adhérant l'une à l'autre, qui pallie ces inconvénients en permettant notamment d'obtenir une adhérence accrue de l'adhésif au vitrage ainsi qu'une meilleure étanchéité de la jonction vitrage-carrosserie. Corrélativement, l'invention vise à gagner du temps au niveau de la chaîne de montage dans l'usine d'automobile.

Le procédé selon l'invention est remarquable notamment en ce que les deux portions de cordon sont formées par le dépôt de matériaux susceptibles de durcir à l'air et sont appliquées sur le vitrage en deux étapes:

on dépose une première portion de cordon sous forme pâteuse sur le vitrage par extrusion de la matière adhésive au moyen d'une filière d'extrusion calibrée, et on applique la deuxième portion juste avant le montage du vitrage dans la baie, alors que la première est durcie.

La deuxième portion peut être déposée sur la carrosserie ou sur la première qui a déjà durci. Avantageusement, on dépose la deuxième portion sur la première.

L'invention concerne également un vitrage convenant pour la mise en œuvre du procédé.

Selon une forme particulièrement avantageuse de l'invention, on combine les caractéristiques suivantes:

a) la portion de cordon qui adhère au vitrage possède une section calibrée, présentant au moins une languette disposée en direction du repli de la tôle de la carrosserie où le vitrage vient se fixer à une certaine distance du bord du vitrage.

b) elle est formée essentiellement d'une matière adhésive durcie au moment du montage du vitrage.

c) cette matière adhésive est déposée sur le vitrage au moyen d'une filière d'extrusion calibrée de manière analogue.

d) le cas échéant, on peut au préalable appliquer un revêtement opaque de protection contre les rayonnements UV le long du pourtour du vitrage.

e) la deuxième portion de cordon est formée en appliquant la matière adhésive par extrusion, sur la première qui a durci; elle est dissimulée à la vue grâce à la languette de la première portion.

Par rapport aux procédés de fixation déjà connus, le procédé selon l'invention présente un grand nombre d'avantages. On peut par exemple appliquer la première portion de cordon sur le vitrage sur le lieu même de fabrication du vitrage. On peut éventuellement éviter ainsi un nettoyage supplémentaire de la surface du verre ou de la couche opaque éventuellement déposée sur les bords du vitrage, comme cela se révèle nécessaire lorsqu'on dépose le cordon seulement au niveau de la chaîne de fabrication du véhicule. C'est en effet tout de suite après sa cuisson qu'une couche opaque d'émail, par exemple, présente les conditions les plus favorables à une bonne adhérence de la matière adhésive.

Le cordon formé sur le lieu même de fabrication des vitrages sert également d'espaceur au cours de la manipulation et de l'emballage des vitrages et diminue ainsi les risques de détérioration.

Un vitrage convenant pour la mise en œuvre du procédé comprend, le long de son pourtour, une couche opaque, notamment en émail noir, une couche de fond, et un cordon fixé par adhérence qui possède une section calibrée présentant une languette disposée vers l'intérieur du vitrage de façon à définir une section en L. Avantageusement, le cordon présente une languette supplémentaire, disposée vers l'extérieur du vitrage, de sorte que les deux languettes définissent une section en U.

Dans un tel procédé, dans lequel on extrude une première portion de cordon immédiatement avant son dépôt sur les bords du vitrage, on peut simultanément fixer sur la surface du verre des éléments supplémentaires, comme par exemple des moulures décoratives, des espaceurs ou autres revêtements, soit par coextrusion, soit de façon indépendante.

Selon une forme préférée de l'invention, le cordon collé sur les bords du vitrage a une section calibrée en U, et la deuxième portion est déposée entre les deux branches du U.

Cette forme de réalisation présente des avantages supplémentaires: les deux languettes constituées par les deux branches du U servent de butée à la matière adhésive constitutive du cordon déposé ultérieurement et canalisent ainsi cette matière en l'empêchant de déborder latéralement.

Alors que le cordon d'adhésif déposé sur le vitrage a déjà durci au moment du montage dans la baie de carrosserie, ce n'est que peu de temps avant ledit montage, au cours de la fabrication du véhicule, que l'on extrude la deuxième portion sur la première dans l'espace délimité par la (les) languette(s) de la première ou sur la tôle de la carrosserie. Quand on appuie le vitrage contre le repli de la tôle prévu pour le recevoir, la deuxième portion de cordon, fraîchement extrudée, remplit le canal laissé libre par la première, tandis que les deux languettes, par exemple les deux branches d'un U, empêchent le débordement latéral de la matière adhésive extrudée en dernier.

Par rapport aux procédés existants, le procédé selon l'invention procure un gain de temps particulièrement avantageux: il est en effet toujours nécessaire, pour le montage par collage d'un vitrage dans une baie, d'utiliser une certaine épaisseur d'adhésif, afin d'assurer une bonne liaison et une bonne étanchéité qui pourraient notamment se trouver compromises par les tolérances de forme du vitrage et/ou de la carrosserie. En déposant, dès la fabrication du vitrage, une certaine épaisseur de cordon adhésif, on diminue d'autant la quantité d'adhésif à déposer au moment du montage. De ce fait, le temps de séchage est corrélativement abaissé et le montage plus rapidement achevé.

De préférence, on emploie comme matière formant le cordon à extruder une prépolymère de polyuréthane à un composant sous forme pâteuse qui, après l'extrusion, durcit sous l'influence de l'humidité de l'air. On peut également utiliser un système de polyuréthane à deux composants ou du caoutchouc butyle ou un élastomère de silicone. L'important est d'employer pour les deux cordons des matières compatibles entre elles qui réalisent également une bonne liaison interne. Il convient pour cela que les deux cordons aient une composition identique ou très voisine. Dans de nombreux cas, on recouvre avantageusement la surface du vitrage où doit être déposé le cordon, d'une couche de fond, ou primaire d'adhérence, suivant la composition de l'adhésif utilisé.

Si cela est nécessaire, la surface du cordon déjà durci peut être réactivé par des moyens mécaniques ou chimiques appropriés.

D'autres caractéristiques et avantages de l'invention apparaîtront dans la description suivante de différents exemples de réalisation de l'invention, sous la forme d'un vitrage monté dans une baie, en référence avec les planches de dessins annexées parmi lesquelles:

- la fig. 1 représente une vue en coupe d'une première forme de réalisation de l'invention avec un cordon de section en L déposé sur le vitrage.

- la fig. 2 représente une deuxième forme de réalisation de l'invention, le cordon déposé sur le vitrage ayant cette fois une section en U.

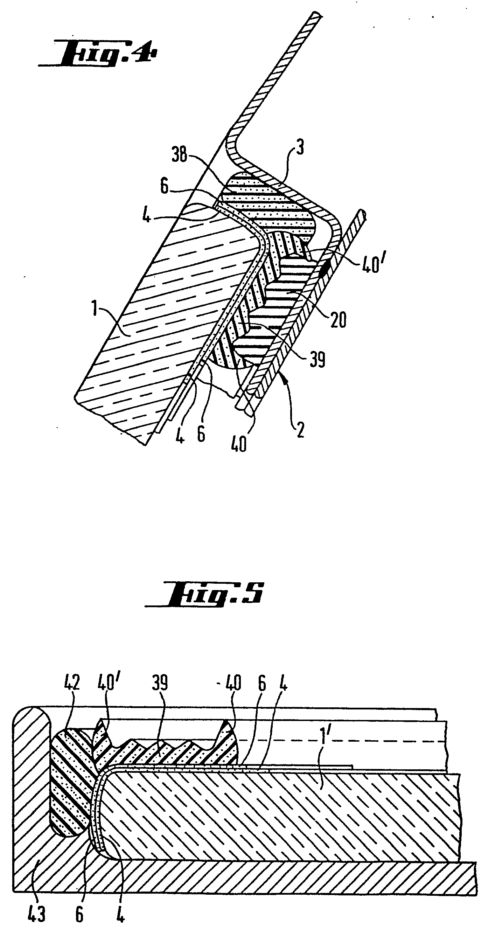

- selon la forme de réalisation représentée à la fig. 3, une moulure supplémentaire est disposée à côté du cordon à coller sur le vitrage.

- selon la forme de réalisation représentée à la fig. 4, on place un autre profilé sur la périphérie du vitrage.

- la fig. 5 représente une possibilité de fabrication du vitrage de la fig. 4 par injection.

Par souci de simplification, on représente le vitrage 1 comme un vitrage monolitique. Il va de soi cependant que tous les types de vitrage peuvent être montés dans une carrosserie de la façon indiquée puisque le montage selon l'invention est indépendant de la structure du vitrage. Toutefois, étant donné qu'actuellement les pare-brise en particulier sont des vitrages feuilletés, l'invention peut trouver une première application dans le domaine des pare-brise feuilletés, mais également elle peut concerner les lunettes arrières.

Le pare-brise 1 représenté sur les figures est pourvu, le long de son pourtour, et du côté dirigé vers le repli 2 de la baie de carrosserie d'une couche opaque 4, par exemple d'une couche d'émail noir. Cette couche sert d'une part de moulure décorative, et empêche que l'on puisse voir de l'extérieur, à travers le vitrage 1, la zone adhésive, et d'autre part, elle protège le cordon adhésif 5 contre les rayonnements UV, et peut éventuellement faciliter l'adhérence du cordon à la surface du verre. C'est en tenant compte de ces considérations que l'on choisit dans le commerce, parmi les pâtes à cuire usuelles, celle qui convient le mieux pour son dépôt sur le vitrage. Selon un procédé fiable, on imprime une pâte à cuire par exemple par sérigraphie sur la surface du verre et on la cuit sur cette surface au cours d'un traitement thermique nécessaire pour le bombage et/ou la trempe du verre.

On dépose sur la couche opaque 4, après sa cuisson, une couche de fond, ou primaire d'adhérence, 6 fine et régulière, et adhérant convenablement à la couche 4. Cette couche 6 peut par exemple être constituée d'un prépolymère d'un polyuréthane dissous dans un solvant, comme le produit Primer 8544 de la Société allemande Teroson-Werke GmbH, ou le produit Glasprimer V 538/6573 de la Société allemande Togo. On procède au dépôt de la couche au moyen d'une buse d'extrusion à fente fine, la buse étant alimentée de façon régulière au moyen d'un tuyau souple d'amenée du produit à partir d'un réservoir d'alimentation. Ce dépôt peut s'effectuer à la main, ou de préférence, au moyen d'un bras automatique, le long du contour du vitrage. Eventuellement, on traite au préalable la couche d'émail noir avec des produits spéciaux du type silane.

Si la couche de fond est formée à partir d'un système de polyuréthane durcissant sous l'effet de l'humidité, on peut réduire le temps nécessaire à son séchage en appliquant, au moyen d'une buse supplémentaire, de la vapeur d'eau chaude. Par rapport aux conditions normales de température et d'humidité de l'air, le temps nécessaire passe de 5 à 10 minutes environ à 1 à 2 minutes environ. On peut de cette façon appliquer le cordon adhésif dans un laps de temps plus court après le dépôt de la couche de fond.

La portion de cordon d'adhésif 5 est formée de préférence d'un prépolymère de polyuréthane; on la dépose sur la couche de fond 6 où elle durcit en un polymère à haut module. On lui donne une forme telle qu'elle ait une section pratiquement à angle droit en L, et présente une languette 8 qui va en se rétrécissant vers le repli 2 de la tôle de la carrosserie et vers l'intérieur du vitrage. Un système qui combine la couche de fond et l'adhésif tels que décrits dans le brevet US 3 779 794 donne de bons résultats.

Tandis que toutes les étapes précédemment décrites sont menées dans l'atelier de fabrication des vitrages, on dépose, sur la première qui a durci, une deuxième portion de cordon 7 formée d'une matière compatible avec elle, ceci juste avant la mise en place du vitrage dans la baie de carrosserie et de la même façon au moyen d'une extrudeuse appropriée.

La portion de cordon qui a durci peut servir de moyen de support et de guidage de la buse d'extrusion de la deuxième portion, et favorise ainsi le dépôt de la deuxième portion.

Dès que la portion de cordon 7 a été déposée sur la portion de cordon 5, on met en place le vitrage 1 dans la baie et on le presse. Ensuite, on insère dans l'interstice qui subsiste entre le vitrage 1 et la portion de tôle 3 un profilé 10 pourvu de garnissages en forme de crochets, qui s'accroche dans le cordon d'adhésif 7.

Quand cela est nécessaire, on peut renforcer l'adhérence mutuelle des deux portions de cordons 5 et 7 en déposant un solvant approprié ou un agent gonflant sur la surface de la portion de cordon 5 avant qu'elle ne soit mise au contact de la portion de cordon 7, pour la réactiver. Cette réactivation chimique peut être remplacée par une réactivation mécanique consistant en une abrasion de la surface du cordon 5.

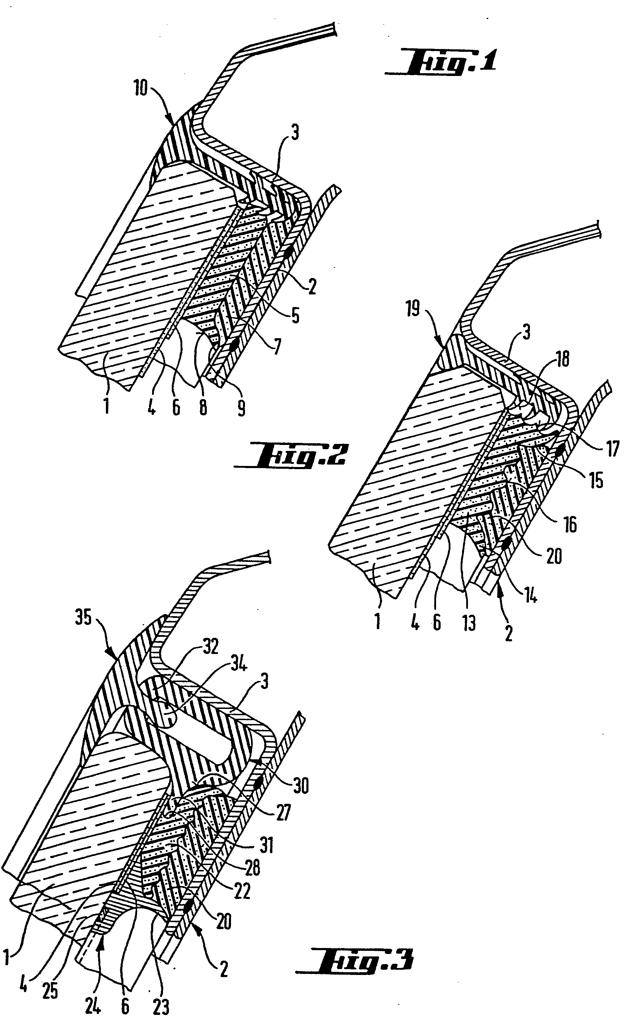

La variante représentée à la fig. 2 illustre le même type de montage que celui décrit à la fig. 1. Toutefois, dans ce cas, on forme une portion de cordon 13 à partir d'un prépolymère de polyuréthane extrudable, au moyen d'une buse d'extrusion dont la section est en U, si bien que cette portion déposée sur la couche de fond 6, par dessus la couche d'émail 4 présente deux languettes 14, 15 qui délimitent un espace vide. Pour augmenter la surface libre du cordon, la portion de surface comprise entre les deux languettes, ainsi que celle voisine de la partie 3 du châssis de la baie sont garnies de cannelures 16 et 17. Les garnissages en forme de crochet 18 d'un profilé 19 viennent se verrouiller sur les cannelures 17.

L'espace vide délimité par les languettes 14, 15 et la surface cannelée 16 est rempli, au moyen d'une buse d'extrusion, d'une deuxième portion de cordon 20 formée d'une matière adhésive pâteuse apte à adhérer à la portion de cordon 13 durcie. Lorsqu'on presse le vitrage contre le repli 2 de la tôle de carrosserie, les languettes effilées 14 et 15 s'affaissent, et compensent ainsi les éventuelles variations de profondeur du repli de la carrosserie.

La fig. 3 illustre un autre exemple de réalisaton de l'invention, dans lequel la portion de cordon proprement dite 22 et la languette 23 se composent de matières différentes coextrudées à l'aide de deux boudineuses débitant dans une seule buse d'extrusion. On peut de cette façon former une languette 23 dont les propriétés sont différentes de celle de la portion de cordon 22. Par exemple, il est possible de lui donner une plus grande dureté ou de la fabriquer en une matière d'une autre couleur. Il est en outre nécessaire que cette matière adhère davantage à la surface du verre que la matière qui forme la portion de cordon 22; en effet, dans le cas représenté sur la figure, la moulure 24 qui constitue la base de la languette 23 chevauche à la fois la couche opaque 4, garnie de la couche de fond 6, et la surface nue du verre; ceci le rend en outre visible de l'extérieur. On peut alors, dans ce cas de figure, enrober la partie visible de bandes décoratives 25.

La portion de cordon 22 présente, du côté dirigé vers la portion de tôle 3 de la baie, un élément de surface 27 effilé. Du fait de la forme de cet élément de surface, il se crée une gorge 28 dans laquelle vient s'insérer la languette 31 d'un joint 30. Ce joint remplit l'espace vide entre la tranche du vitrage 1 et la portion de tôle 3 de la baie de carrosserie. Il présente en outre une section en U, qui s'ouvre sur la face du vitrage tournée vers l'extérieur de l'habitacle du véhicule, les branches du U étant terminées par des saillies 32 de blocage, qui maintiennent la languette de fixation 34 d'un joint de recouvrement 35.

Dans l'exemple de réalisation illustré à la fig. 4, l'espace vide entre la tranche du vitrage 1 et la portion de tôle 3 de la baie est également rempli par un joint en caoutchouc 38. Dans ce cas, on l'applique sur le vitrage en même temps que la portion de cordon 39 par exemple par coextrusion. La présence de la couche de fond 6 contribue également à améliorer l'adhérence entre le verre ou la couche d'émail 4 et la portion de cordon 39. Cette dernière présente deux languettes 40 et 41 qui délimitent un espace vide comblé par la deuxième portion de cordon 20 collée sur le repli 2 de la baie.

Le joint 38 a pour rôle essentiel de maintenir le vitrage après sa mise en place en attendant le durcissement complet du cordon d'adhésif 20.

La fig. 5 illustre une forme de réalisation analogue à celle décrite en relation avec la fig. 4, mais dans laquelle le joint 42 est calibré grâce à un procédé de moulage par injection. La portion de cordon 39 a la section en U déjà décrite. Elle peut être déposée sur le pourtour du vitrage en même temps que le joint 42, après le dépôt préalable d'une couche d'émail 4 et d'une couche de fond 6 et être formée de la même matière que le joint 42. Mais il est également possible que ces deux profilés soient composés différemment, ou même déposés sur le vitrage à des instants différents. Ce procédé de moulage est particulièrement avantageux car on peut donner au contour extérieur du vitrage l'aspect que l'on souhaite, simplement en appliquant sur le bord du vitrage un profilé d'une forme déterminée. On peut aussi, dans ce cas précis, fabriquer une feuille de verre de dimensions légèrement réduites, et, par injection à l'intérieur d'un moule dont les dimensions correspondent à celles souhaitées, obtenir les dimensions finales désirées du vitrage.

Dans tous les cas de figure décrits, il est également possible de former la deuxième portion de cordon adhésif en extrudant, à l'aide de moyens appropriés, la matière adhésive sur le repli 2 de la tôle de carrosserie. Les avantages de l'invention sont entièrement conservés dans ce mode de réalisation: les languettes du premier cordon jouent leur rôle, et le montage est facilité, par rapport aux procédés de l'art antérieur, par notamment une rapidité d'exécution accrue sur la chaîne de montage. Après le dépôt de la deuxième portion d'adhésif, on procède comme dans les cas précédemment décrits, en mettant en place le vitrage dans la baie et en le pressant contre la tôle.

**Revendications**

1. Procédé de montage d'un vitrage dans une baie, notamment une baie de carosserie d'automobile, par collage au moyen d'un cordon d'adhésif composé de deux portioins de cordon superposées et adhérant l'une à l'autre, la première portion de cordon (5, 13, 22, 39) étant déposée sur le vitrage et possédant une section calibrée, caractérisé en ce que la première portion de cordon (5, 13, 22, 39) est formée et déposée sur le vitrage sous forme pâteuse par extrusion d'une matière adhésive au moyen d'une filière d'extrusion calibrée, et la deuxième portion de cordon (7, 20) est appliquée juste avant le montage du vitrage dans la baie, alors que la première (5, 13, 22, 39) est durcie.

2. Procédé selon la revendication 1, caractérisé en ce que la première portion de cordon (5, 13, 22, 39) est à base d'un prépolymère de polyuréthane à un composant qui durcit sous l'influence de l'humidité de l'air.

3. Procédé selon la revendication 1, caractérisé en ce que la première portion de cordon (5, 13, 22, 39) est à base d'un système de polyuréthane à deux composants.

4. Procédé selon l'une des revendications précédentes, caractérisé en ce qu'on utilise pour les deux portions de cordon des matières compatibles entre elles, de préférence de compositions très voisines ou identiques.

5. Procédé selon l'une des revendications précédentes, caractérisé en ce que la deuxième portion de cordon (7, 20) est appliquée sur la première.

6. Procédé selon l'une des revendications 1 à 4, caractérisé en ce que la deuxième portion de cordon (7, 20) est appliquée sur la tôle de la carrosserie.

7. Procédé selon l'une des revendications 1 à 6, caractérisé en ce que la première portion de cordon (5, 13, 22, 39) est déposée directement sur le vitrage ou sur un revêtement opaque, notamment en émail noir, déposé au préalable le long du pourtour du vitrage, juste après la fabrication du vitrage ou, le cas échéant, la cuisson de l'émail.

8. Procédé selon l'une des revendications 1 à 7, caractérisé en ce que la section calibrée de la première portion de cordon (5, 13, 22, 39) déposée sur le vitrage (1, 1') présente une languette (9, 14, 23, 40) disposée en direction du repli 2 de la tôle de carrosserie où le vitrage vient se fixer, et la deuxième portion de cordon (7, 20) est appliquée par extrusion de la matière adhésive qui la constitue et est dissimulée à la vue grâce à la présence de la languette (9, 14, 23, 40) de la première portion.

9. Procédé selon l'une des revendications précédentes, caractérisé en ce que la première portion de cordon (5) possède une section calibrée en L.

10. Procédé selon l'une des revendications 1 à 8, caractérisé en ce que la première portion de cordon (13, 39) possède une section calibrée en U, limitée par deux languettes.

11. Procédé selon l'une des revendications 8 à 10, caractérisé en ce que la languette (9, 14, 40) est effilée.

12. Procédé selon l'une des revendications précédentes, caractérisé en ce que la première portion de cordon (13, 22, 39) présente sur le côté de sa surface qui adhère à la deuxième portion de cordon (7, 20) des cannelures 16 qui accroissent la surface d'adhérence entre les deux cordons.

13. Procédé selon l'une des revendications 8 à 12, caractérisé en ce que la languette (23) dirigée vers le repli (2) de la tôle de carrosserie fait partie d'un profilé (24) qui est coextrudé avec la première portion de cordon (22) et qui participe au collage du vitrage.

14. Procédé selon la revendication 13, caractérisé en ce que l'on dispose dans le profilé (24) une bande décorative (25), à proximité du revêtement opaque (4) qui entoure le vitrage, et sur la partie du vitrage visible par le conducteur.

15. Procédé selon l'une des revendications précédentes, caractérisé en ce que l'on dépose sur la tranche du vitrage (1, 1') un joint profilé (38, 42) coextrudé avec la première portion de cordon (39).

16. Procédé selon l'une des revendications précédentes, caractérisé en ce que l'on traite la première portion de cordon (5, 13, 22, 39) avant de la mettre en contact avec la deuxième portion de cordon (7, 20) avec un agent gonflant, un solvant ou des moyens mécaniques qui activent la matière adhésive qui la constitue.

17. Vitrage pour la mise en œuvre du procédé selon l'une des revendications 1 à 16, caractérisé en ce qu'il comprend le long de son pourtour une couche opaque, notamment une couche d'émail noir, une couche de fond, et un cordon fixé par adhérence qui possède une section calibrée présentant une languette disposée sur le bord intérieur du cordon, de façon à définir une section en L.

18. Vitrage selon la revendication 17, caractérisé en ce que le cordon (5) présente une languette supplémentaire, disposée sur le bord extérieur du cordon, de sorte que les deux languettes définissent une section en U.

## Patentansprüche

1. Verfahren zum Einsetzen einer Glasscheibe in einen Rahmen, insbesondere in einen Rahmen einer Kraftfahrzeug-Karosserie, durch Verklebung mit Hilfe eines aus zwei übereinander angeordneten und aneinander haftenden Teilsträngen bestehenden Kleberstranges, von denen der erste Teilstrang (5, 13, 22, 39) auf der Glasscheibe angeordnet ist und einen kalibrierten Querschnitt aufweist, dadurch gekennzeichnet, dass der erste Teilstrang (5, 13, 22, 39) in pastöser Form durch Extrusion einer Klebermasse mit Hilfe einer kalibrierten Extrusionsdüse auf der Glasscheibe abgelegt, und der zweite Teilstrang (7, 20) unmittelbar vor dem Einsetzen der Glasscheibe in den Rahmen aufgebracht wird, wenn der erste Teilstrang (5, 13, 22, 39) bereits ausgehärtet ist.

2. Verfahren nach Anspruch 1, dadurch gekennzeichnet, dass der erste Teilstrang (5, 13, 22, 39) eine Masse auf Basis eines Einkomponenten-Polyurethan-Prepolymers ist, die unter dem Einfluss der Luftfeuchtigkeit aushärtet.

3. Verfahren nach Anspruch 1, dadurch gekennzeichnet, dass der erste Teilstrang (5, 13, 22, 39) eine Masse auf Basis eines Zweikomponenten-Polyurethan-Systems ist.

4. Verfahren nach einem der voraufgehenden Ansprüche, dadurch gekennzeichnet, dass für die beiden Teilstränge miteinander verträgliche Massen verwendet werden, vorzugsweise ähnliche oder identische Zusammensetzungen.

5. Verfahren nach einem der voraufgehenden Ansprüche, dadurch gekennzeichnet, dass der zweite Teilstrang (7, 20) auf den ersten Teilstrang aufgebracht wird.

6. Verfahren nach einem der Ansprüche 1 bis 4, dadurch gekennzeichnet, dass der zweite Teilstrang (7, 20) auf den Metallsteg der Karosserie aufgebracht wird.

7. Verfahren nach einem der Ansprüche 1 bis 6, dadurch gekennzeichnet, dass der erste Teilstrang (5, 13, 22, 39) unmittelbar auf die Glasscheibe oder auf einen undurchsichtigen, insbesondere aus schwarzem Einbrennlack bestehenden und zuvor entlang dem Umfang der Glasscheibe aufgebrachten Überzug im Anschluss an die Herstellung der Glasscheibe, oder gegebenenfalls im Anschluss an den Einbrennvorgang des Einbrennlacks, aufgetragen wird.

8. Verfahren nach einem der Ansprüche 1 bis 7, dadurch gekennzeichnet, dass der kalibrierte Querschnitt des ersten auf der Glasscheibe (1, 1') abgelegten Teilstrangs (5, 13, 22, 39) einen in Richtung auf den für die Befestigung der Glasscheibe dienenden Flansch (2) des Karosseriebleches weisenden Steg (9, 14, 23, 40) aufweist, und dass der zweite Teilstrang (7, 20) durch Extrusion der diesen bildenden Klebermasse aufgebracht und durch den vorhandenen Steg (9, 14, 23, 40) des ersten Teilstrangs verdeckt wird.

9. Verfahren nach einem der voraufgehenden Ansprüche, dadurch gekennzeichnet, dass der erste Teilstrang (5) einen kalibrierten L-förmigen Querschnitt aufweist.

10. Verfahren nach einem der Ansprüche 1 bis 8, dadurch gekennzeichnet, dass der erste Teilstrang (13, 39) einen durch zwei Stege begrenzten kalibrierten U-förmigen Querschnitt aufweist.

11. Verfahren nach einem der Ansprüche 8 bis 10, dadurch gekennzeichnet, dass der Steg (9, 14, 40) zum Ende hin spitz zuläuft.

12. Verfahren nach einem der voraufgehenden Ansprüche, dadurch gekennzeichnet, dass der erste Teilstrang (13, 22, 39) auf der an dem zweiten Teilstrang (7, 20) haftenden Oberfläche Riffelungen (16) aufweist, die die Kontaktfläche zwischen den beiden Teilsträngen vergrössern.

13. Verfahren nach einem der Ansprüche 8 bis 12, dadurch gekennzeichnet, dass der gegen den Flansch (2) des Karosseriebleches gerichtete Steg (23) Teil eines Profils (24) ist, das zusammen mit dem ersten Teilstrang (22) koextrudiert ist und an der Verklebung der Glasscheibe teilnimmt.

14. Verfahren nach Anspruch 13, dadurch gekennzeichnet, dass in dem Profil (24) nahe dem die Glasscheibe umgebenden opaken Überzug (4) in dem vom Fahrer sichtbaren Teil ein dekorativer Streifen (25) eingebettet ist.

15. Verfahren nach einem der voraufgehenden Ansprüche, dadurch gekennzeichnet, dass auf der Umfangsfläche der Glasscheibe (1, 1') ein Dichtprofil (38, 42) durch Koextrusion mit der ersten Teilraupe (39) aufgebracht wird.

16. Verfahren nach einem der voraufgehenden Ansprüche, dadurch gekennzeichnet, dass der erste Teilstrang (5, 13, 22, 39) vor dem Aufbringen des zweiten Teilstrangs (7, 20) mit einem aufquellenden Mittel, mit einem Lösungsmittel oder mit mechanischen Mitteln behandelt wird, um die den Teilstrang bildende Klebermasse zu aktivieren.

17. Glasscheibe für die Durchführung des Verfahrens nach einem der Ansprüche 1 bis 16, dadurch gekennzeichnet, dass sie entlang ihrem Umfang eine undurchsichtige Schicht, insbesondere aus schwarzem Email, eine Primerschicht und einen durch Klebung haftenden Strang mit kalibriertem Querschnitt aufweist, der auf seiner Innenseite mit einem Steg versehen ist und so einen L-förmigen Querschnitt aufweist.

18. Glasscheibe nach Anspruch 17, dadurch gekennzeichnet, dass der Strang (5) auf seiner Aussenseite einen zusätzlichen Steg aufweist derart, dass die beiden Stege einen U-förmigen Querschnitt des Strangs bilden.

**Claims**

1. A method of mounting a window pane in an aperture, notably an aperture in a vehicle body, by adhesion by means of an adhesive strip comprising two superposed strip portions adhering to each other, the first strip portion (5, 13, 22, 39) being deposited on the pane and having a determined cross-section, characterised in that the first strip portion (5, 13, 22, 39) is formed and deposited on the pane in paste form by extrusion of an adhesive material using an extrusion nozzle of determined calibre, and the second strip portion (7, 20) is applied just before mounting of the pane in the aperture, when the first (5, 13, 22, 39) has hardened.

2. A method according to claim 1, characterised in that the first strip portion (5, 13, 22, 39) is based on a polyurethane prepolymer having a component which hardens under the effect of atmospheric humidity.

3. A method according to claim 1, characterised in that the first strip portion (5, 13, 22, 39) is based on a polyurethane system having two components.

4. A method according to one of the preceding claims, characterised in that there are used for the two strip portions materials which are compatible with each other, and preferably very similar or identical.

5. A method according to one of the preceding claims, characterised in that the second strip portion (7, 20) is applied to the first.

6. A method according to one of claims 1 to 4, characterised in that the second strip portion (7, 20) is applied to the sheet metal of the body.

7. A method according to one of claims 1 to 6, characterised in that the first strip portion (5, 13, 22, 39) is deposited directly on to the pane or on an opaque coating, notably of black enamel, previously deposited along the periphery of the pane just after manufacture of the pane or, if required, firing of the enamel.

8. A method according to one of claims 1 to 7, characterised in that the determined cross-section of the first strip portion (5, 13, 22, 39) deposited on the pane (1, 1') has a tongue (9, 14, 23, 40) arranged in the direction of a fold (2) in the sheet metal of the bodywork where the pane is fitted, and the second strip portion (7, 20) is applied by extrusion of the adhesion material of which it is formed and is hidden from view owing to the presence of the tongue (9, 14, 23, 40) of the first portion.

9. A method according to one of the preceding claims, characterised in that the first strip portion (5) has an L-shaped determined section.

10. A method according to one of claims 1 to 8, characterised in that the first strip portion (13, 39) has a U-shaped determined section, limited by two tongues.

11. A method according to one of claims 8 to 10, characterised in that the tongue (9, 14, 40) is tapered.

12. A method according to one of the preceding claims, characterised in that the first strip portion (13, 22, 39) has on the side of its surface which adheres to the second strip portion (7, 20) grooves 16 which increase the surface area of adhesion between the two strips.

13. A method according to one of claims 8 to 12, characterised in that the tongue (23) directed towards the fold (2) of the sheet metal of the bodywork is part of a profile member (24) which is co-extruded with the first strip portion (22) and which participates in adhesion to the pane.

14. A method according to claim 13, characterised in that there is deposited in the profile member (24) a decorative strip (25) adjacent the opaque coating (4) which surrounds the pane, on the part of the pane visible to the driver.

15. A method according to one of the preceding claims, characterised in that there is deposited on the edge of the pane (1, 1') a profiled joint (38, 42) co-extruded with the first strip portion (39).

16. A method according to one of the preceding claims, characterised in that the first strip portion (5, 13, 22, 39) is treated, before it is put in contact with the second strip portion (7, 20), with a blowing agent, a solvent or mechanical means which activate the adhesive material.

17. A pane for carrying out a method according to one of claims 1 to 16, characterised in that it comprises along its periphery an opaque layer, notably a layer of black enamel, a base layer and a strip fixed by adhesion which has a determined cross-section having a tongue arranged on the interior edge of the strip, so as to define an L-shaped section.

18. A pane according to claim 17, characterised in that the strip (5) has an additional tongue, arranged on the exterior edge of the strip, so that the two tongues define a U-shaped section.

0 121 481

Fig. 1

Fig. 2

Fig. 3

**Fig.4**

**Fig.5**